# EUROPEAN PATENT APPLICATION

(11) **EP 0 762 526 A1**
(43) Date of publication of application: **12.03.1997**
(21) Application number: 96114281.7
(22) Date of filing: 06.09.1996
(51) Int. Cl.: H01M 8/24

(54) **Solid electrolyte fuel cell system**

(30) Priority: 08.09.1995 JP 231067/95
(71) Applicant: OSAKA GAS CO., LTD., Osaka-shi, Osaka (JP)
(72) Inventor: Akagi, Kosuke, Chuo-ku, Osaka (JP)
(74) Representative: Petersen, Frank, Dipl.-Ing.

(57) **Abstract**

A fuel cell system includes cells (C) in form of rectangular plates stacked in a spaced relationship to form a cell assembly (NC), with fuel gas passages (y) formed between the cells. Each cell is held by a pair of cell holders (5) and includes an electrolyte layer (1) having an oxygen electrode (2) applied to one surface thereof and a fuel electrode (3) applied to the other surface. A separator (4) for defining oxygen-containing gas passages (x) opposed to the oxygen electrode (2) or the fuel electrode (3). Each cell (C), with the separator (4), has one of opposed pairs of end surfaces acting as open end surfaces (C1) where the oxygen-containing gas passages (x) are open, and the other opposed pair of end surfaces acting as closed end surfaces (C2) where the oxygen-containing gas passages (x) are closed. Cell holders (5) acting as pairs are arranged at open sides (C3) of the cells (C) where the oxygen-containing gas passages (x) are open. The cell holders (5) define notches (51) each having substantially the same depth as a thickness of one of the cells, and extending from one end to the opposite end of one of the cells, for receiving one of the open sides (C3). Each of the notches includes contact surfaces (53) for tight contact with the closed end surfaces (C2) adjacent opposite ends of each of the open sides (C3). The cell assembly (NC) is formed by the cells (C) stacked as held by the cell holders (5) with the open sides (C3) fitted into the notches (51), and in a spaced relationship to form the fuel gas passages (y) in between. The fuel gas passages (y) are closed at the open end surfaces by the pairs of the cell holders (5), and open at the closed end surfaces.

## Description

### BACKGROUND OF THE INVENTION

### 1. FIELD OF THE INVENTION

This invention relates to a fuel cell system including a cell assembly having a plurality of fuel cells stacked in a spaced relationship to define intercellular passages in between. Each fuel cell is in the form of a rectangular plate including an electrolyte layer having an oxygen electrode applied to one surface thereof and a fuel electrode applied to the other surface, and a passage defining member opposed to one of the oxygen electrode and the fuel electrode to define intracellular passages. The passage defining member defines open opposite side surfaces of the cell where the intracellular passages open, and closes the other opposite side surfaces.

### 2. DESCRIPTION OF THE RELATED ART

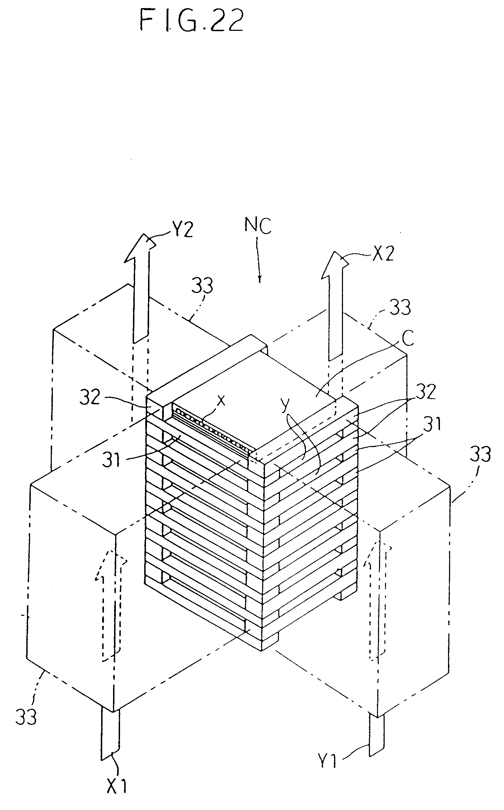

A conventional fuel cell system as noted above is shown in Fig. 22, in which a plurality of cells are stacked to form a cell assembly with intercellular passages defined between adjacent cells. This fuel cell system includes pairs of first elongate partition members 31 and pairs of second elongate partition members 32 stacked alternately in parallel crosses, the second partition members 32 having substantially the same thickness as cells C. Each cell C is disposed between an adjacent pair of second partition members 32, with opposite sides of cell C defining openings of intracellular passages "x" (hereinafter referred to simply as the open sides) being disposed above the first partition members 31, to form a cell assembly NC. An intercellular passage "y" is defined by a pair of first partition members 31 between an adjacent pair of cells C. These intercellular passages "y" are closed at end surfaces where the intracellular passages "x" are open (hereinafter referred to simply as the open end surfaces). The intercellular passages "y" are open at end surfaces of cells C where the intracellular passages "x" are closed (hereinafter referred to simply as the closed end surfaces). The intracellular passages "x" and intercellular passages "y" are partitioned from each other by the first partition members 31 and second partition members 32 in tight contact with peripheries of sides of cells C where the intracellular passages "x" are open (which sides will be hereinafter referred to as the open sides).

Box-shaped gas duct defining members 33 are connected at opening sides thereof to the two sides of the cell assembly NC where the intracellular passages "x" are open, to define a pair of intracellular passage gas ducts X1 and X2 communicating with the intracellular passages "x". Similar gas duct defining members 33 are connected at opening sides thereof to the two sides of the cell assembly NC where the intercellular passages "y" are open, to define a pair of intercellular passage gas ducts Y1 and Y2 communicating with the intercellular passages "y". One of the intracellular passage gas ducts X1 and X2 is used for supplying an intracellular passage gas to the intracellular passages "x", and the other for exhausting the intracellular passage gas from the intracellular passages "x". One of the intercellular passage gas ducts Y1 and Y2 is used for supplying an intercellular passage gas to the intercellular passages "y", and the other for exhausting the intercellular passage gas from the intercellular passages "y".

The conventional structure is complicated in that the pairs of first partition members and the pairs of second partition members are stacked alternately in parallel crosses. Moreover, each cell requires one pair of first partition members and one pair of second partition members, i.e. four components. Thus, a great number of components are required to stack a plurality of cells. The stacking structure for forming the cell assembly is extremely complicated.

### SUMMARY OF THE INVENTION

This invention has been made having regard to the state of the art noted above, and its object is to simplify the stacking structure for forming the cell assembly.

The above object is fulfilled, according to this invention, by a fuel cell system in which cell holders acting as pairs are arranged at open sides of cells where intracellular passages are open, the cell holders defining notches each having substantially the same depth as a thickness of one of the cells, and extending from one end to the opposite end of one of the cells, for receiving one of the open sides,
each of the notches including contact surfaces for tight contact with closed end surfaces adjacent opposite ends of each of the open sides,
a cell assembly is formed by the cells stacked as held by the cell holders with the open sides fitted into the notches, and in a spaced relationship to form intercellular passages in between, and
the intercellular passages are closed at the open end surfaces by the pairs of the cell holders, and open at the closed end surfaces.

According to the above construction, a space is secured between an adjacent pair of cells by thin blades left in the cell holders after formation of the notches and having a small material thickness. These thin blades close opposite sides of this space to define intercellular passage between the adjacent cells.

The intracellular passages and intercellular passage are partitioned from each other by placing the thin blades and the pairs of contact surfaces of the cell holders holding the cell, and the reverse surfaces of adjacent cell holders, in tight contact with peripheries of the open end surfaces of the cell.

As a result, the cell holders are simply stacked to provide a simple structure. Moreover, only two cell holders are required for one cell, so that the number of components is less than in than in the prior art, simplifying the stacking structure for forming the cell assembly.

Preferably, of the four side surfaces of the cell assembly, two opposed side surfaces have communicating openings communicating with the intracellular passages, and a pair of wall surfaces extending in a stacking direction at opposite sides of the communicating openings, while the other opposite surfaces have openings of the intercellular passages.

With the above construction, gas ducts communicating with the intracellular passages and partitioned from the openings of the intercellular passages may be formed simply by connecting a gas duct forming structure to the wall surfaces extending in the stacking direction to cover the sides of the cell assembly where the communicating openings are open.

The above feature produces the effect of simplifying the gas duct forming structure for forming the gas ducts communicating with the intracellular passages.

The gas duct forming structure may be connected to the wall surfaces with opposite edges thereof fitted in grooves formed in the wall surfaces of the cell holders. This construction provides reliable seals between the gas duct forming structure and the wall surfaces. Where the gas duct forming structure is formed of ceramic as are the cell holders, the gas duct forming structure and cell holders expand and contract likewise with temperature variations of the fuel cell system when the latter is operated and stopped. This avoids a deterioration in the sealed condition between the gas duct forming structure and the wall surfaces.

This feature produces the effect of improving gas-tightness and durability of the gas ducts communicating with the intracellular passages.

The gas ducts communicating with the intracellular passages may be defined by a pair of ceramic side wall members, ceramic lids and metallic side wall members covering the sides of the cell assembly where the communicating openings are open.

The pair of ceramic side wall members may be connected to the wall surfaces with opposite edges thereof fitted in grooves formed in the wall surfaces of the cell holders. This construction provides reliable seals between the ceramic side wall members and the wall surfaces, and avoids a deterioration in the sealed condition between the ceramic side wall members and the wall surfaces despite temperature variations of the fuel cell system when the latter is operated and stopped.

The metallic wall members may have edges thereof fitted in grooves formed in one of the ceramic side wall members and one of the ceramic lids and slits formed in the other ceramic lid, with seals filled into the grooves and the slits. Then, reliable seals are provided between openings of the ceramic side wall members and ceramic lids and the metallic wall members.

The seals may comprise a material which is flexible in high temperature conditions during operation of the fuel cell system. This maintains the sealed condition between the openings and the metallic wall members despite temperature variations of the fuel cell system when the latter is operated and stopped, and avoids a deterioration in the sealed condition.

Thus, part of the gas duct forming structure may be formed of metal to reduce cost, while improving gas-tightness and durability of the gas ducts communicating with the intracellular passages.

The gas ducts communicating with the intracellular passages may be defined by a pair of side wall members, a lid, and a pair of partition members having side walls connected to the side wall members, and lids, for covering the sides of the cell assembly where the communicating openings are open.

The pair of side wall members may be connected to the wall surfaces with opposite edges thereof fitted in grooves formed in the wall surfaces of the cell holders. This construction provides reliable seals between the side wall members and the wall surfaces, and avoids a deterioration in the sealed condition between the side wall members and the wall surfaces despite temperature variations of the fuel cell system when the latter is operated and stopped.

The partition members may have edges of the side walls thereof fitted in grooves formed in the side wall members and the lid, with seals filled in the grooves. Then, reliable seals are provided between the partition members, side wall members and lid.

The seals may comprise a material which is flexible in high temperature conditions during operation of the fuel cell system. This maintains the sealed condition between the partition members, side wall members and lid despite temperature variations of the fuel cell system when the latter is operated and stopped, and avoids a deterioration in the sealed condition.

Thus, large parts of the gas duct forming structure may be formed of metal to further reduce cost, while improving gas-tightness and durability of the gas ducts communicating with the intracellular passages.

The gas ducts communicating with the intracellular passages may be defined by a lid, and partition members having side walls and lids, for covering the sides of the cell assembly where the communicating openings are open.

The partition members may have edges of the side walls thereof fitted in grooves formed in the wall surfaces of the cell holders and grooves formed in the lid, with seals filled in the grooves. Then, reliable seals are provided between the partition members, and the wall surfaces and lid.

The seals may comprise a material which is flexible in high temperature conditions during operation of the fuel cell system. This maintains the sealed condition between the partition members, and the wall surfaces and lid despite temperature variations of the fuel cell system when the latter is operated and stopped, and avoids a deterioration in the sealed condition.

Thus, large parts of the gas duct forming structure may be formed of metal to further reduce cost, while improving gas-tightness and durability of the gas ducts communicating with the intracellular passages.

The intercellular passages may open, at an opposed pair of side surfaces of the cell assembly, to an interior of a box-shaped housing. The intercellular passages then communicate with the gas ducts communicating with the intracellular passages, through connecting passages formed in the cell holders.

The gas duct communicating with the intracellular passages, which is used also as the gas duct communicating with the intercellular passages, is used as an exhaust gas duct. The interior of the box-shaped housing is used as a gas duct for supplying gas to the intercellular passages. Thus, there is no need to provide a gas duct for exhausting gas from the intercellular passages. In the following description, the gas duct communicating with the intracellular passages, which is used also as the gas duct communicating with the intercellular passages, is called a common gas duct.

An intercellular passage gas is supplied through the openings of the intercellular passages at opposite sides of the cell assembly. The intercellular passage gas is exhausted to the common gas duct through the connecting passages. An intracellular passage gas also is exhausted to the common gas duct. The intercellular passage gas and intracellular passage gas exhausted to the common gas duct are burned therein. The cell assembly is heated by the combustion heat.

Thus, in this fuel cell system, the cell assembly is heated by the combustion heat of the intercellular passage gas and intracellular passage gas exhausted to the common gas duct. With this construction, the intercellular passage gas and intracellular passage gas exhausted are burned adjacent the cell assembly, to check radiation loss. Since there is no need to provide a gas duct for exhausting gas from the intercellular passages, and radiation loss is checked, the fuel cell system has a simplified gas duct forming structure for forming gas ducts communication with the intercellular passages, and improved generating efficiency.

At the opposite ends of the side of the cell assembly where the intercellular passages are open, there are a wall surface formed by end surfaces of the cell holders stacked at one side, and a wall surface formed by the cell holders stacked at the other side. Therefore, gas ducts communicating with the intercellular passages and partitioned from gas ducts communicating with the intracellular passages may be formed simply by connecting a gas duct forming structure forming the gas ducts communicating with the intercellular passages, to the wall surface formed by end surfaces of the cell holders stacked at one side, and the wall surface formed by the cell holders stacked at the other side.

The above feature produces the effect of simplifying the gas duct forming structure for forming the gas ducts communicating with the intercellular passages.

The box-shaped housing may include a partition for connecting an inner surface of the box-shaped housing to one of the wall surfaces formed by the end surfaces of the cell holders stacked, and a partition for connecting an inner surface of the box-shaped housing to another of the wall surfaces formed by the end surfaces of the cell holders, to divide the box-shaped housing into two compartments. Then, one of the sides of the cell assembly where the intercellular passages are open is opposed to one of the compartments, while the other side is opposed to the other compartments.

One of the two compartments is used as a gas duct for supplying gas to the intercellular passages, and the other compartment as a gas duct for exhausting gas from the intercellular passages.

It will be appreciated that, since the cell assembly is heated to a very high temperature during operation of the fuel cell system, it is necessary to cover the cell assembly in a heat insulating condition such as by placing the cell assembly in the box-shaped housing.

Thus, the gas ducts communicating with the intercellular passages may be formed by utilizing the box-shaped housing whose primary purpose is heat insulation.

In this way, it is possible to simplify the gas duct forming structure for forming the gas ducts communicating with the intercellular passages.

The cell holders are pressed to the open end surfaces of the cells placed in the notches of the cell holders. The inclined contact surface and the incline of the closed end surface of the cell absorb a difference between a space between `a pair of contact surfaces and a space between a pair of closed end surfaces. This allows the contact surfaces of the cell holders to be in tight contact with the opposite closed end surfaces of the cells.

Thus, a cost reduction is achieved in the absence of the necessity to form the cells and cell holders with high precision.

If the opposite contact surfaces were formed parallel to each other to fit with a pair of closed end surfaces of the cell, the cells and cell holders must be formed with high dimensional precision to allow the contact surfaces to fit tight with the opposite closed end surfaces of the cells.

Other features and advantages of this invention will be apparent from the following description of the preferred embodiments to be had with reference to the drawings.

### BRIEF DESCRIPTION OF THE DRAWINGS

Fig. 1 is a perspective view, partly broken away, of a fuel cell of a fuel cell system in a first embodiment of this invention;
Fig. 2 is an exploded perspective view showing a cell unit in the first embodiment;
Fig. 3 is a perspective view of the cell unit under gas leak inspection;
Fig. 4 is a perspective view of a cell assembly in the first embodiment;
Fig. 5 is a sectional plan view of the cell assembly in the first embodiment;
Fig. 6 is a section taken on line A-A of Fig. 5;
Fig. 7 is a section taken on line B-B of Fig. 5;
Fig. 8 is a side view in vertical section of a principal portion of the fuel cell system;
Fig. 9 is a sectional plan view of a fuel cell system in a second embodiment of the invention;
Fig. 10 is a section taken on line C-C of Fig. 9;
Fig. 11 is a section taken on line D-D of Fig. 9;
Fig. 12 is a sectional plan view of a fuel cell system in a third embodiment of the invention;
Fig. 13 is a section taken on line E-E of Fig. 12;
Fig. 14 is a sectional plan view of a fuel cell system in a fourth embodiment of the invention;
Fig. 15 is a section taken on line F-F of Fig. 14;
Fig. 16 is a side view in vertical section of a fuel cell system in a fifth embodiment of the invention;
Fig. 17 is a section taken on line G-G of Fig. 16;
Fig. 18 is a section taken on line H-H of Fig. 16;
Fig. 19 is a sectional plan view of a fuel cell system in a sixth embodiment of the invention;
Fig. 20 is a section taken on line I-I of Fig. 19;
Fig. 21 is a section taken on line J-J of Fig. 19; and
Fig. 22 is a perspective view of a conventional fuel cell system.

### DETAILED DESCRIPTION OF THE PREFERRED EMBODIMENTS

### [First Embodiment]

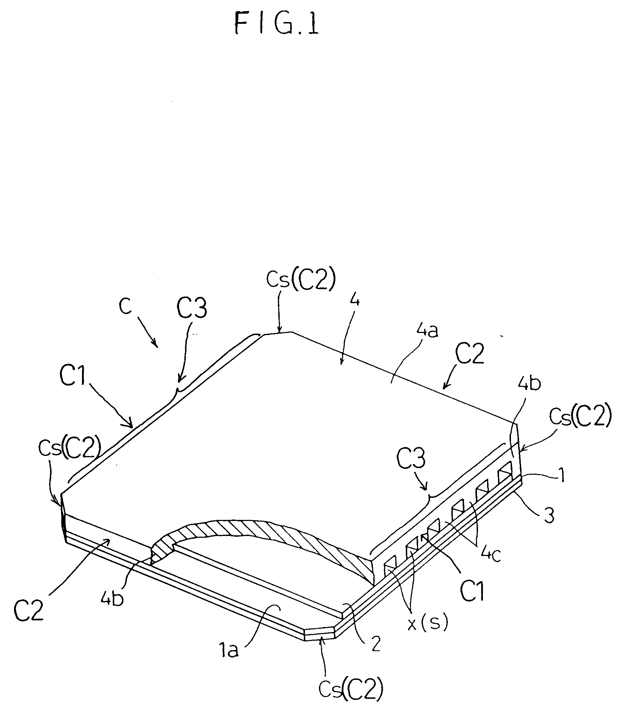

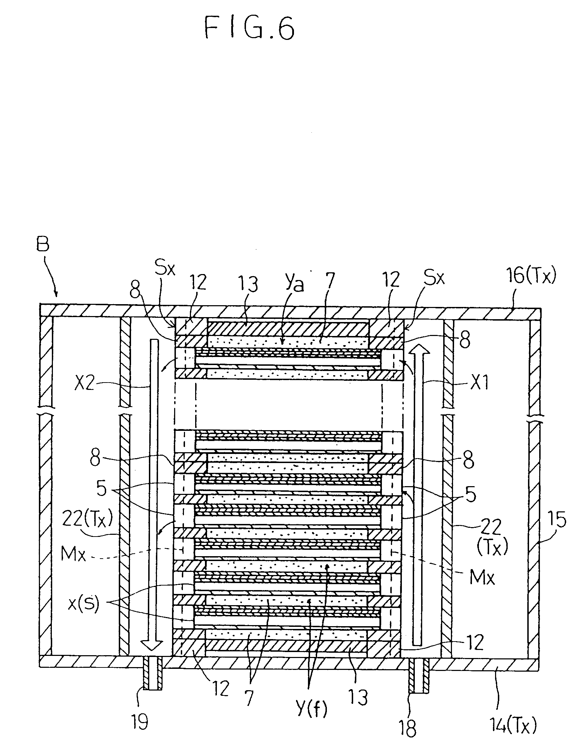

A first embodiment of this invention will be described with reference to Figs. 1 through 8.

A cell C of a fuel cell system will be described first with reference to Fig. 1.

The cell C is in the form of a rectangular plate. The cell C includes a solid-electrolyte layer 1 having an oxygen electrode 2 formed on one surface thereof and a fuel electrode 3 formed on the other surface, and a conductive separator 4 opposed to the oxygen electrode 2 to act as a passage defining element for defining intracellular passages "x".

Specifically, the oxygen electrode 2 in the form of a layer or plate is applied to one surface of the solid-electrolyte layer 1 in the form of a rectangular plate. The electrolyte layer 1 includes an electrolyte exposing portion 1a extending along an entire length of each of two opposite parallel edges thereof. The fuel electrode 3 also in the form of a layer or plate is applied to the other surface of the electrolyte layer 1 to extend substantially over an entire area thereof. Thus, the cell C has a three-layer plate structure of rectangular shape, to derive an electromotive force from the oxygen electrode 2 and fuel electrode 3.

The separator 4 is formed of a conductive material, and includes, as integral parts thereof, a plate-like portion 4a, strip-shaped projections 4b extending along opposite edges of the plate-like portion 4a, and a plurality of ridges 4c arranged between the strip-shaped projections 4b. The conductive separator 4 is attached to the oxygen electrode 2, with the pair of strip-shaped projections 4b applied to the opposite electrolyte exposing portions 1a, and with the plurality of ridges 4c contacting the oxygen electrode 2. The above is the construction of each cell C.

The oxygen electrode 2 and conductive separator 4 are connected to each other in conductive state, to define therebetween intracellular passages "x" opening at two opposite end surfaces of the cell C.

That is, the conductive separator 4 defines open sides C1 at opposite sides of the cell C where intracellular passages "x" are open, and closed sides C2 at the other opposite sides. In the following description, the sides of the cell C where the intracellular passages "x" are open are referred to as open sides C3, end surfaces defining openings of the intracellular passages "x" are referred to as open end surfaces C1, and end surfaces closing the intracellular passages "x" are referred to as closed end surfaces C2.

The intracellular passages "x" are opposed to the oxygen electrode 2, and act as oxygen-containing gas passages "s".

The four corners of conductive separator 4, solid-electrolyte layer 1 and fuel electrode 3 are cut off to define inclines. Thus, as described in detail later, the cell C defines inclines Cs at opposite ends of each closed end surface C2 thereof.

The solid-electrolyte layer 1, preferably, is formed of tetragonal zirconia which is a solid solution of ytterbia in about 3 mol%. The oxygen electrode 2, preferably, is formed of lanthanum-manganese oxide. The fuel electrode 3, preferably, is formed of a cermet of nickel and zirconia.

The conductive separator 4, preferably, is formed of lanthanum-chromium oxide which has excellent resistance to oxidation and reduction.

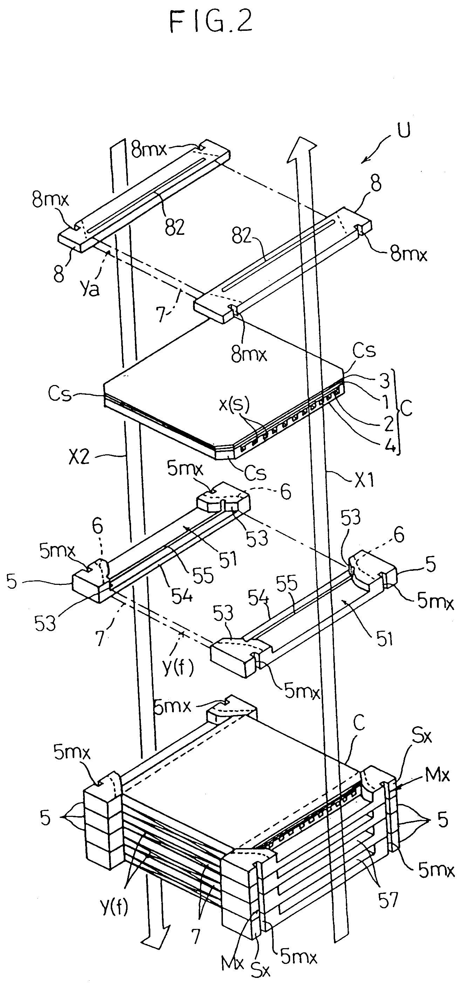

A stacking structure in which a plurality of cells C are stacked in a spaced relationship to form a cell assembly NC, with intercellular passages "y" defined between adjacent cells C, will be described next with reference to Figs. 2 through 4.

Numeral 5 in these figures denotes cell holders each in the form of a rectangular plate and disposed at each open side C3. Each cell holder 5 defines a notch 51 for receiving one of the open sides C3 of one cell C. The notch 51 has a depth substantially corresponding to the thickness of cell C, and extends from one side to the opposite side of cell C. The notch 51 has a pair of contact surfaces 53 for tight contact with the closed end surfaces C2 adjacent opposite ends of the open side C3 fitted into the notch 51.

The pair of contact surfaces 53 are inclined to approach each other away from the open sides C3 of cell C as seen in the direction of thickness of the cell holder 5 (which corresponds to a cell stacking direction described later). Each cell C defines inclines Cs at the opposite ends of each closed end surface C2 thereof. These inclines Cs may be placed in tight contact with the inclined contact surfaces 53, respectively.

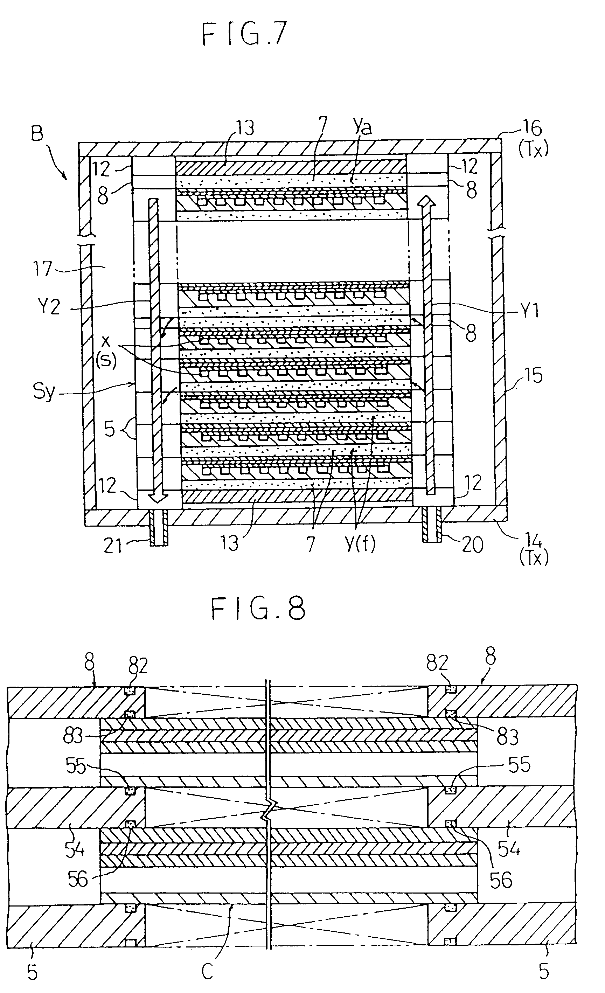

As also shown in Fig. 8, each cell holder 5 has a groove 55 formed in an inward surface of the notch 51 for filling a seal therein as described later. A similar groove 56 is formed in the reverse surface of the notch 51. The grooves 55 and 56 overlap each other in the direction of thickness noted above.

Five cells C are stacked as supported by the cell holders 5 with a flexible conductive material 7 filled between adjacent cells C, to form a cell unit U. The cell unit U includes a pair of partition members 8 placed on a pair of cell holders 5 at an end in the stacking direction where the fuel cell 3 is exposed, the partition members 8 closing the pair of open sides.

As seen in the cell stacking direction, the partition members 8 have the same plate-like outer configuration as the cell holders 5. As also shown in Fig. 8, each partition member 8 has grooves 82 and 83 formed in opposite surfaces thereof and overlapping the grooves 55 and 56 of the cell holders 5 as seen in the direction of thickness noted above.

In forming the cell unit U, as shown in broken lines 6 in Fig. 2, seals are placed in the grooves 55 and 56 of the cell holders 5, the grooves 83 of the partition members 8, between the cell holders 5 adjacent each other in the stacking direction, and between the cell holders 5 and partition members 8 adjacent each other in the stacking direction.

The open sides C3 of each cell C are fitted in the notches 51 of the cell holders 5 by pressing the cell holders 5 against the open sides C3. Consequently, the contact surfaces 53 are placed in tight contact with the inclines Cs at the opposite ends of each closed end surface C2 of the cell C.

The flexible conductive material 7, preferably, comprises a felt-like nickel material which has excellent resistance to heat and reduction. The conductive material 7 is formed to allow gas circulation. The cell holders 5 and partition members 8 are formed of a ceramic material which is electrically insulating and has excellent resistance to heat. The seals have glass or ceramic as a main component thereof to have heat resistance and electrical insulation, which have adhesive action and gas-tightness when heated to about 1000°C.

The cell unit U formed as describe above is heated to about 1000°C in an atmosphere of nitrogen gas, whereby the cell unit U is integrated by adhesive action of the seals.

Each cell holder 5 includes a thin blade 54 left after formation of the notch 51 and having a small material thickness. These thin blades 54 secure a space between an adjacent pair of cells C, and close opposite sides of this space, to define intercellular passage "y" between the adjacent cells C. The flexible conductive material 7 interconnects the adjacent cells C in a conductive state.

The intracellular passages "x" and intercellular passage "y" are partitioned from each other in gastight condition by placing the thin blades 54 and the pairs of contact surfaces 53 of the cell holders 5 holding the cell C, and the reverse surfaces of adjacent cell holders 5, in tight contact with peripheries of the open end surfaces C1 defining the openings of intracellular passages "x" of that cell C.

End surfaces of the cell holders 5 and partition members 8 stacked have communicating openings 57 defined by the notches 51 to communicate with intracellular passages "x", and a pair of wall surfaces Sx extending in the stacking direction at opposite sides of the communicating openings 57.

The intercellular passages "y" are closed at the opposite open end surfaces C1 of cells C, and open at the opposite closed end surfaces C2 thereof. The intercellular passages "y" are opposed to the fuel electrodes 3 to act as fuel gas passages "f" for flowing a fuel gas containing hydrogen gas.

Next, a sequence of a gas leak inspection conducted for the cell unit U will be described.

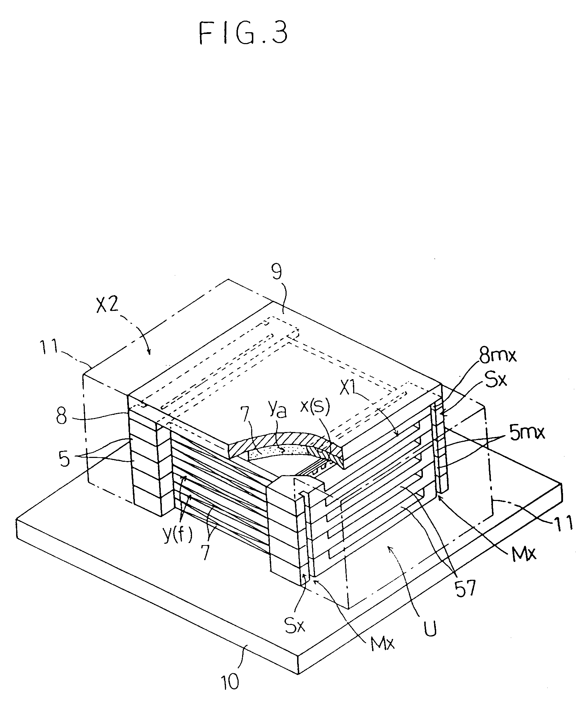

As shown in Fig. 3, a partition plate 9 is placed to rest on the partition members 8. A passage is formed between the pair of partition members 8, which is closed at the opposite open end surfaces C1 of cells C, and open at the opposite closed end surfaces C2 thereof, as are the intercellular passages "y". This passage is called an additional intercellular passage "ya".

The cell unit U is placed on a base 10, and boxes 11 are arranged at the two sides of the cell unit U where the communicating openings 57 are open, with open sides of the boxes 11 opposed to the two sides. The interior of one of the boxes 11 is used, for inspection purposes, as a supply gas duct X1 communicating with the intracellular passages "x". The interior of the other box 11 is used as an exhaust gas duct X2 communicating with the intracellular passages "x".

The gas leak inspection is carried out by supplying an oxygen-containing gas through the supply gas duct X1 to the intracellular passages "x". Soap water or the like is applied to the seal portions between cells C and cell holders 5, between cells C and partition members 8, between cell holders 5, and between cell holders 5 and partition members 8. In this way, an leakage may be detected with ease.

After the gas leak inspection, the partition plate 9, base 10 and boxes 11 are removed from the cell unit U.

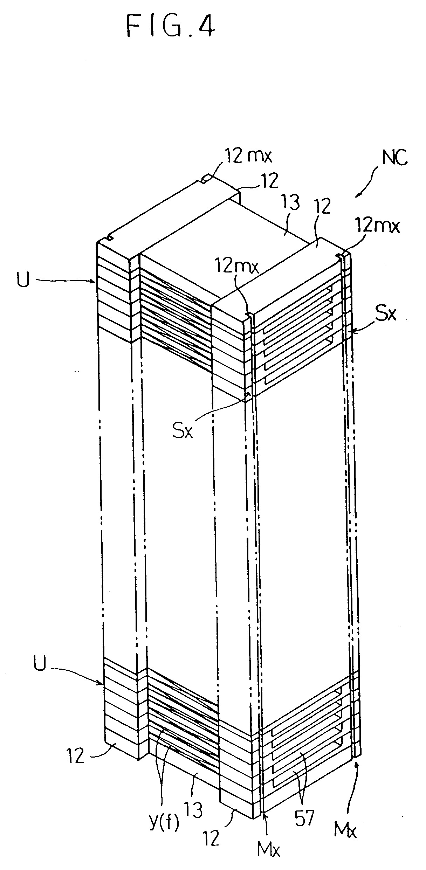

Subsequently, as shown in Fig. 4, a cell assembly NC is formed by stacking a plurality of cell units U with the flexible conductive material 7 filled in between. A pair of collecting plate holders 12 arranged at each of opposite ends of the cell assembly NC in the stacking direction.

The collecting plate holders 12 have the same outer configuration as the partition members 8 as seen in the stacking direction.

In stacking a plurality of cell units U, seals are filled in the grooves 56 of the cell holders 5, the grooves 82 of the partition members 8, between the cell holders 5 and partition members 8, between the collecting plate holders 12 and cell holders 5, and between the collecting plate holders 12 and partition members 8.

The cell assembly NC formed as describe above is heated to about 1000°C in an atmosphere of nitrogen gas, whereby the cell assembly NC is integrated by adhesive action of the seals.

Cell units U adjacent each other in the stacking direction are interconnected in a conductive state by the flexible conductive material 7 between the pair of cell holders 5 of one cell unit U and the pair of partition members 8 of the other cell unit U.

Collecting plates 13 are arranged at opposite ends of the cell assembly NC between the collecting plate holders 12, in contact with the flexible conductive material 7. Output power is taken out through the opposite collecting plate 13.

Of the four sides of the cell assembly NC, two opposite sides each have communicating openings 57 communicating with intracellular passages "x", and two wall surfaces Sx extending in the stacking direction at opposite sides of the communicating openings 57. The other two opposite sides have openings of the intercellular passages "y".

Each wall surface Sx has a groove Mx extending over an entire length in the stacking direction. The grooves Mx are defined by grooves 5mx of the cell holders 5, grooves 8mx of the partition members 8, and grooves 12mx of the collecting plate holders 12.

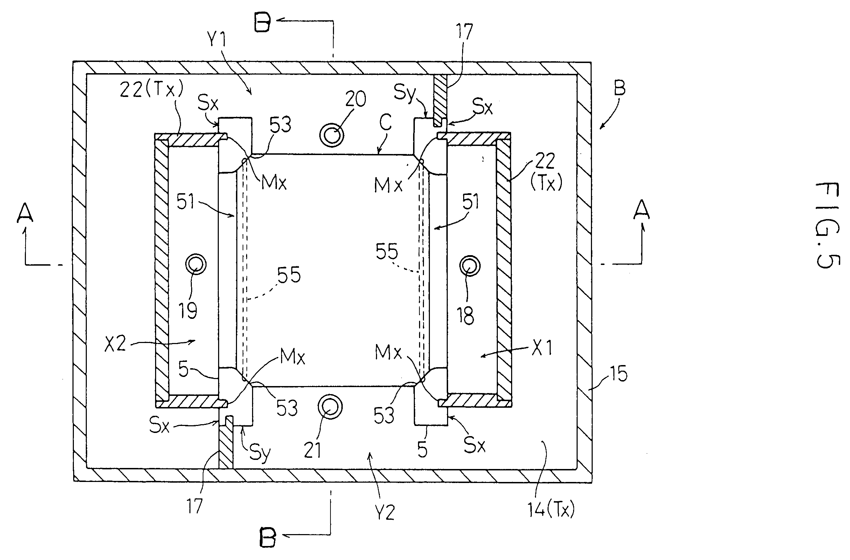

Next, an overall construction of the fuel cell system will be described with reference to Figs. 5 through 8.

Side wall members 22 having a C-shaped cross section and formed of ceramic as are the cell holders 5 are connected to the wall surfaces Sx, with a pair of edges thereof fitted in the grooves Mx.

The cell assembly NC described above is mounted on a base 14, and is surrounded by a square enclosure 15 also mounted on the base 14. The base 14 closes a lower opening of the square enclosure 15, and lower openings of the ceramic side wall members 22.

An upper opening of the square enclosure 15 and upper openings of the ceramic side wall members 22 are closed by a lid 16.

The base 14 and lid 16 are formed of ceramic as are the cell holders 5.

Thus, the base 14, square enclosure 15 and lid 16 constitute a box-shaped housing B for enclosing the cell assembly NC. The two sides of the cell assembly NC where the intercellular passages "y" are open are opposed to interior regions of the box-shaped housing B. In other words, the intercellular passages "y" are open to the interior regions of the box-shaped housing B.

The ceramic side wall members 22, base 14 and lid 16 cover the sides of the cell assembly NC where the communicating openings 57 are open, and define therein gas ducts X1 and X2 communicating with the intracellular passages "x". The gas duct X1 formed in one of the ceramic side wall members 22 is used for supplying gas to the intracellular passages "x". The gas duct X2 formed in the other ceramic side wall member 22 is used for exhausting gas from the intracellular passages "x".

Thus, the ceramic side wall members 22, base 14 and lid 16 constitute a gas duct forming structure Tx for forming the gas ducts X1 and X2 communicating with the intracellular passages "x". The gas duct forming structure Tx is connected to the wall surfaces Sx to cover the sides of the cell assembly NC where the communicating openings 57 are open.

One of two partition plates 17 connects a wall surface Sy formed by end surfaces of the cell holders 5, partition members 8 and collecting plate holders 12 at one side of the cell assembly NC to inner surfaces of the box-shaped housing B, i.e. an inner surface of the base 14, an inner surface of the square enclosure 15 and an inner surface of the lid 16. The other partition plate 17 connects a wall surface Sy formed by end surfaces of the cell holders 5, partition members 8 and collecting plate holders 12 at the other side of the cell assembly NC to inner surfaces of the box-shaped housing B, i.e. an inner surface of the base 14, an inner surface of the square enclosure 15 and an inner surface of the lid 16. In this way, the interior of the box-shaped housing B is divided into two compartments. One of the sides of the cell assembly NC where the intercellular passages "y" are open communicates with one of the compartments. The other side of the cell assembly NC communicates with the other compartment. Thus, one of the two compartments is used as a gas duct Y1 for supplying gas to the intercellular passages "y", and the other compartment as a gas duct Y2 for exhausting gas from the intercellular passages "y".

A gas supply pipe 18 is connected to the gas duct X1 for supplying gas to the intracellular passages "x". A gas exhaust pipe 19 is connected to the gas duct X2 for exhausting gas from the intracellular passages "x". A gas supply pipe 20 is connected to the gas duct Y1 for supplying gas to the intercellular passages "y". A gas exhaust pipe 21 is connected to the gas duct Y2 for exhausting gas from the intercellular passages "y".

### [Second Embodiment]

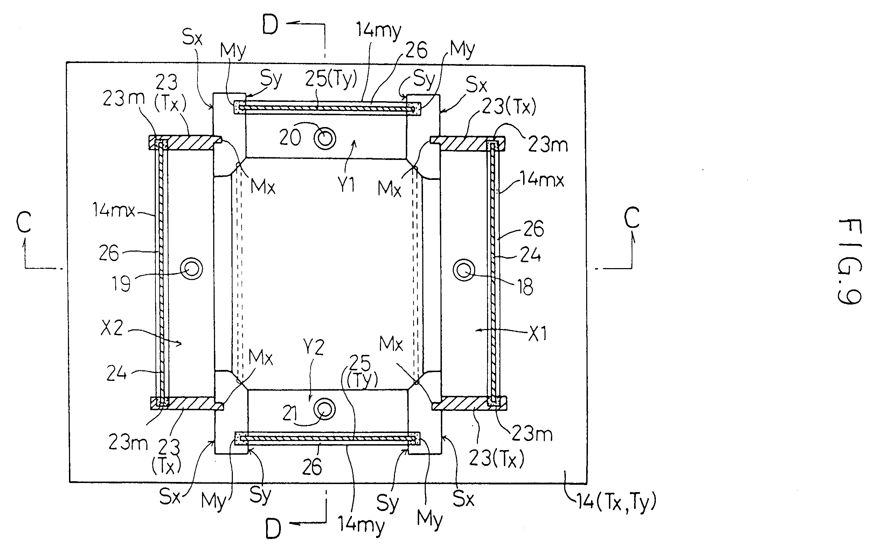

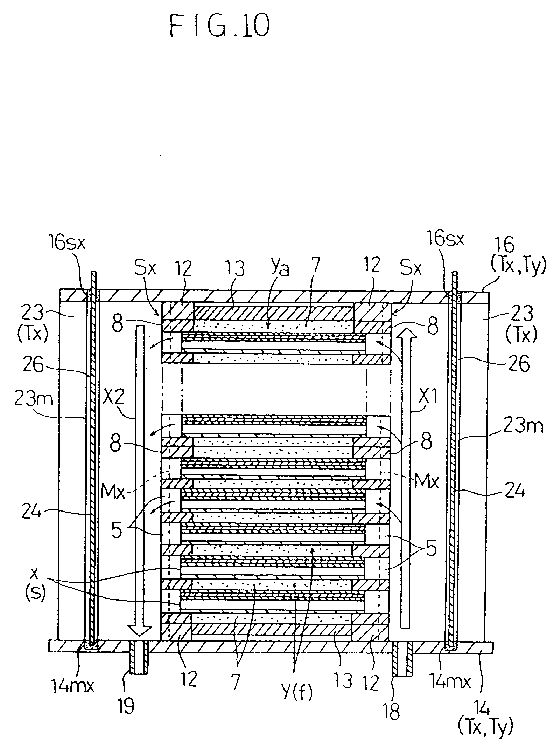

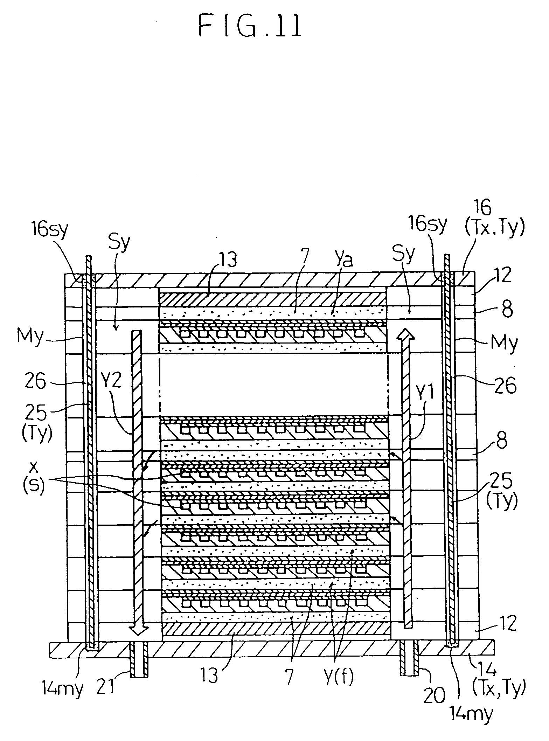

A second embodiment will be described with reference to Figs. 9 through 11.

The cells C have the same construction as in the first embodiment.

The cell assembly NC is the same as in the first embodiment excepting that grooves My are formed in the wall surface Sy formed by the end surfaces of the cell holders 5, partition members 8 and collecting plate holder 12 at one side of the cell assembly NC, and in the wall surface Sy formed by the end surfaces of the cell holders 5, partition members 8 and collecting plate holder 12 at the other side of the cell assembly NC.

An overall construction of the fuel cell system will be described hereinafter.

Side wall members 23 formed of ceramic as are the cell holders 5 are connected to the wall surfaces Sx, with edges thereof fitted in the grooves Mx, respectively.

The cell assembly NC having the above construction is mounted on a base 14. Each pair of ceramic side wall members 23 has grooves 23m formed in opposed inner surfaces to extend over the entire length in the stacking direction. The base 14 has grooves 14mx formed in inner surfaces thereof to be continuous with the grooves 23m of the ceramic side wall members 23. The base 14 also has grooves 14my formed in inner surfaces thereof to be continuous with the grooves My.

Metallic wall members 24 are fitted at three edges thereof in the grooves 14mx of the base 14, and the grooves 23m of the ceramic side wall members 23. Metallic wall members 25 are fitted at three edges thereof in the grooves 14my of the base 14, and the grooves My.

A lid 16 defines slits 16sx continuous with the grooves 23m of the ceramic side wall members 23, and slits 16sy continuous with the grooves My. The slits 16sx receive ends of the metallic wall members 24, while the slits 16sy receive ends of the metallic wall members 25.

Seals 26 are filled into the grooves 14mx, grooves 23m and slits 16sx, and into the grooves 14my, grooves My and slits 16xy. The seals 26 is melted to be soft in a high-temperature condition (about 1000°C) during operation of the fuel cell system.

The base 14 and lid 16 are formed of ceramic as are the cell holders 5.

The ceramic side wall members 23, metallic wall members 24, base 14 and lid 16 cover the sides of the cell assembly NC where the communicating openings 57 are open, and define therein gas ducts X1 and X2 communicating with the intracellular passages "x".

That is, the base 14 and lid 16 correspond to an opposed pair of ceramic wall members. The ceramic side wall members 23, the opposed ceramic wall members 14 and 16 and metallic wall members 24 constitute a gas duct forming structure Tx for forming the gas ducts X1 and X2 communicating with the intracellular passages "x".

The metallic wall members 25, base 14 and lid 16 cover the sides of the cell assembly NC where the intercellular passages "y" open, and define therein gas ducts Y1 and Y2 communicating with the intercellular passages "y".

That is, the metallic wall members 25, base 14 and lid 16 constitute a gas duct forming structure Ty for forming the gas ducts Y1 and Y2 communicating with the intercellular passages "y". The gas duct forming structure Ty is connected to wall surfaces Sy formed of end surfaces of the cell holders 5, partition members 8 and collecting plate holders 12 to cover one side of the cell assembly NC where the intercellular passages "y" are open, and connected to wall surfaces Sy formed of end surfaces of the cell holders 5, partition members 8 and collecting plate holders 12 to cover the side of the cell assembly NC where the intercellular passages "y" are open.

### [Third Embodiment]

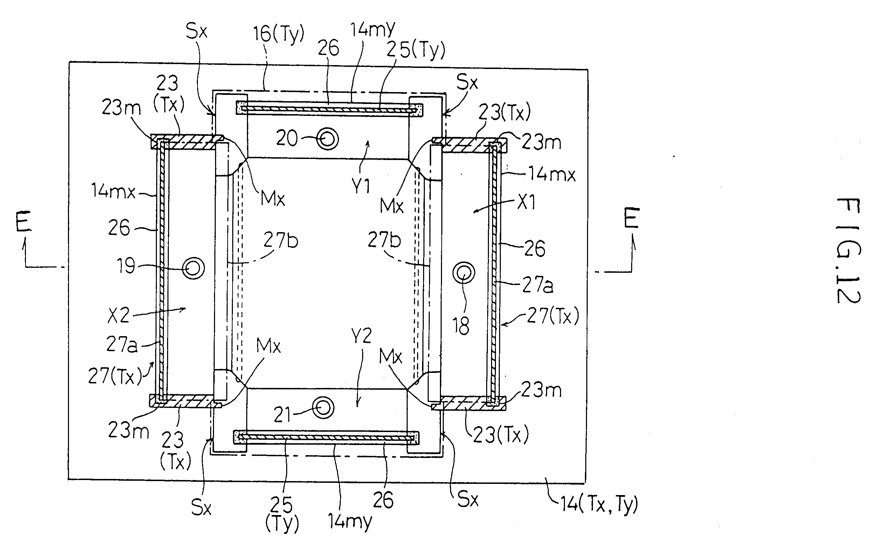

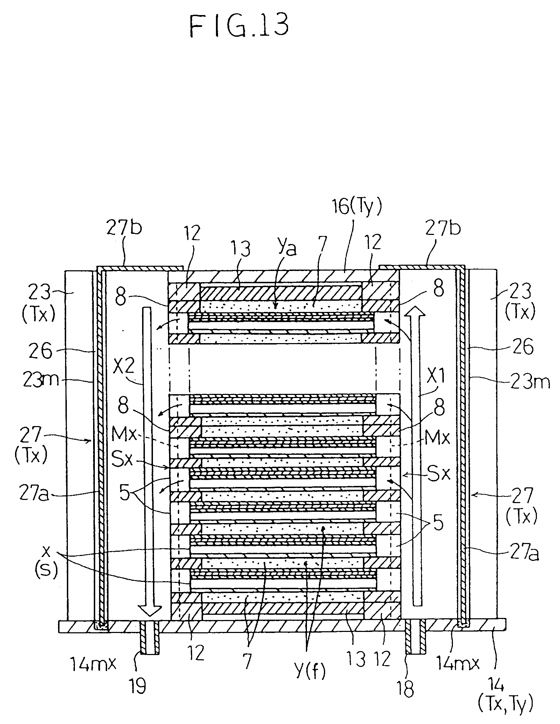

A third embodiment will be described with-reference to Figs. 12 and 13.

The cell assembly NC is formed in the same way as in the second embodiment.

An overall construction of the fuel cell system will be described hereinafter.

The fuel cell system is the same as in the second embodiment excepting the gas duct forming structure Tx for forming the gas ducts X1 and X2 communicating with the intracellular passages "x".

As in the second embodiment, the ceramic side wall members 23 are connected to the wall surfaces Sx, with the edges fitted in the grooves Mx. The cell assembly NC having the ceramic side wall members 23 is mounted on the base 14.

Each pair of ceramic side wall members 23 has grooves 23m formed in opposed inner surfaces to extend over the entire length in the stacking direction. The base 14 has grooves 14mx formed in inner surfaces thereof to be continuous with the grooves 23m of the ceramic side wall members 23.

The lid 16 defines only slits 16xy and not slits 16sx. The lid 16 does not extend over the ceramic side wall members 23.

Metallic wall members 27 include side walls 27a and lids 27b connected to the ceramic side wall members 23. Each side wall 27a is fitted at three edges thereof in the groove 14mx of the base 14 and the grooves 23m of the ceramic side wall members 23. Seals 26 are filled in the groove 14mx and grooves 23m.

The ceramic side wall members 23, metallic wall members 27 and base 14 cover the sides of the cell assembly NC where the communicating openings 57 are open, and define therein gas ducts X1 and X2 communicating with the intracellular passages "x".

That is, the ceramic side wall members 23, base 14 (corresponding to a lid) and metallic wall members 27 constitute a gas duct forming structure Tx for forming the gas ducts X1 and X2 communicating with the intracellular passages "x".

### [Fourth Embodiment]

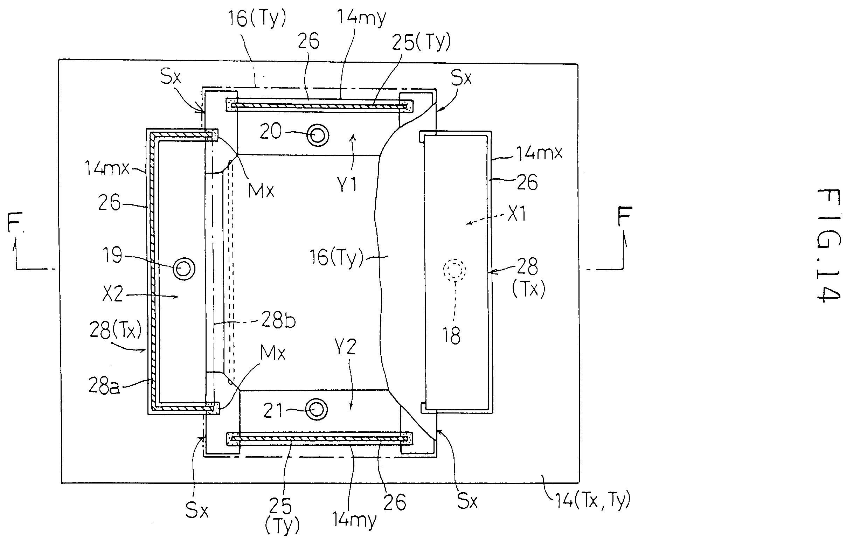

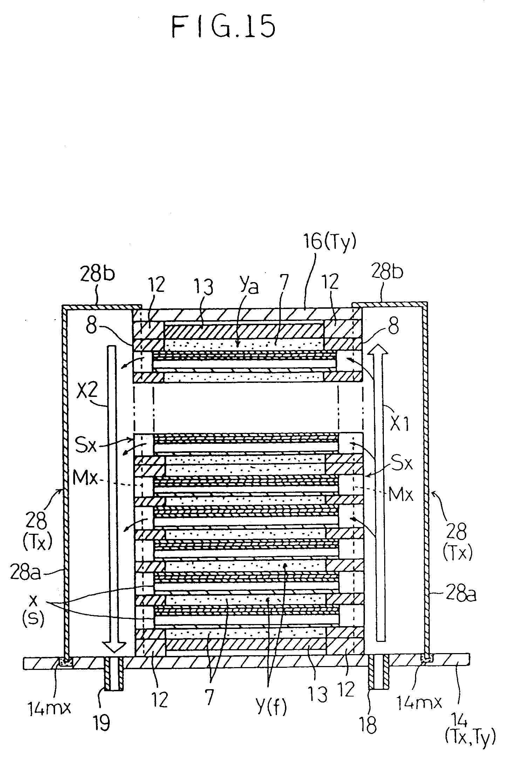

A fourth embodiment will be described with reference to Figs. 14 and 15.

The cell assembly NC is formed in the same way as in the second embodiment.

An overall construction of the fuel cell system will be described hereinafter.

The fuel cell system is the same as in the second embodiment excepting the gas duct forming structure Tx for forming the gas ducts X1 and X2 communicating with the intracellular passages "x".

The cell assembly NC is mounted on the base 14.

The lid 16 defines only slits 16xy and not slits 16sx.

The base 14 has, formed in the inner surface thereof, grooves 14mx each being approximately C-shaped as seen in the stacking direction, and having opposite ends thereof continuous with the opposite grooves Mx.

Metallic wall members 28 include side walls 28a each being approximately C-shaped as seen in the stacking direction, and lids 28b each closing one end of one of the side walls 28a. Each side wall 28a is fitted at edges thereof in the opposite grooves Mx and the groove 14mx of the base 14. Seals 26 are filled in the grooves Mx and groove 14mx.

The metallic wall members 28 and base 14 cover the sides of the cell assembly NC where the communicating openings 57 are open, and define therein gas ducts X1 and X2 communicating with the intracellular passages "x".

That is, the base 14 (corresponding to a lid) and metallic wall members 28 constitute a gas duct forming structure Tx for forming the gas ducts X1 and X2 communicating with the intracellular passages "x".

### [Fifth Embodiment]

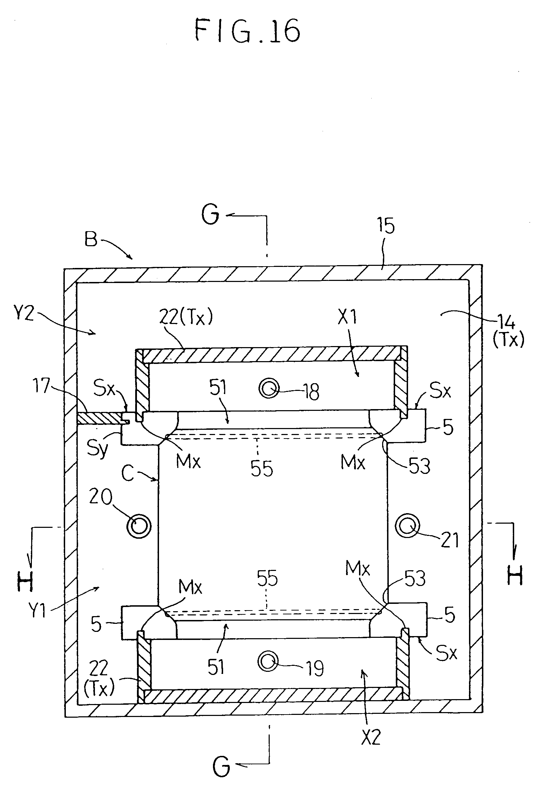

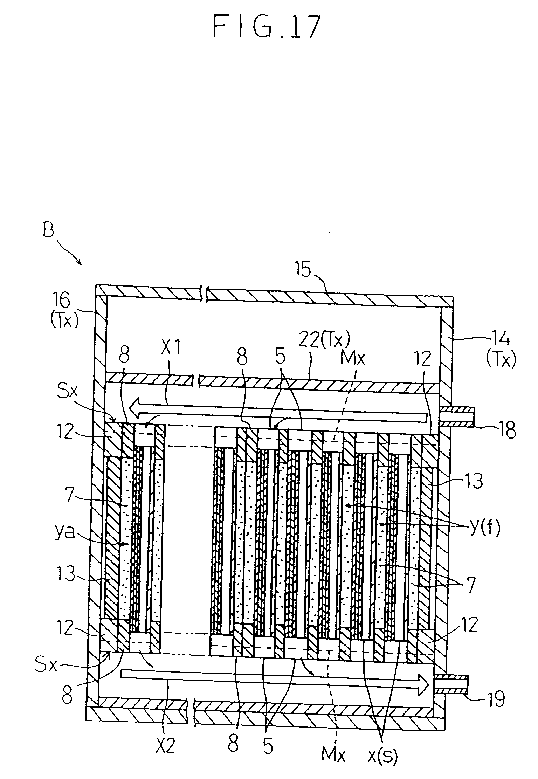

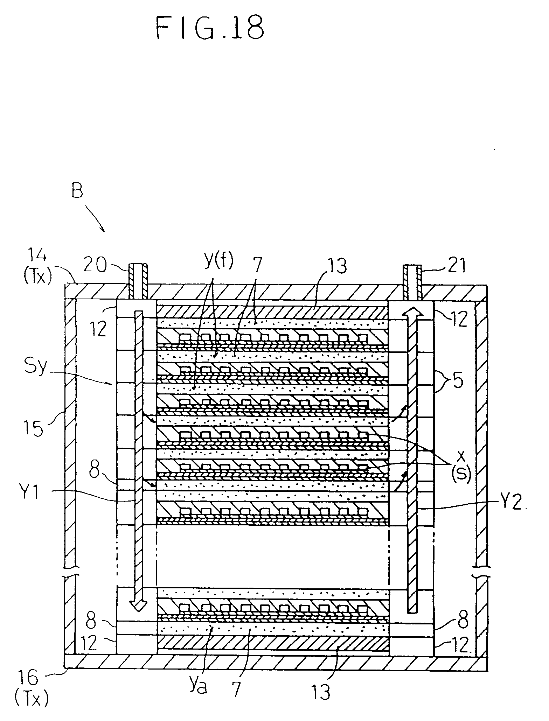

A fifth embodiment will be described with reference to Figs. 16 through 18.

The cells C and cell assembly NC have the same construction as in the first embodiment.

In the first embodiment, the cell assembly NC is mounted in the box-shaped housing B with the cells C stacked vertically. In the fourth embodiment, the cell assembly NC is mounted in the box-shaped housing B with the stacking direction turned to extend sideways.

An overall construction of the fuel cell system will be described hereinafter.

The square enclosure 15 is set to have an axis and side walls thereof extending horizontally.

The cell assembly NC having ceramic side wall members 22 as in the first embodiment, is mounted in the square enclosure 15, with one of the ceramic side wall members 23 resting on one side wall of the square enclosure 15.

The opposite openings of the square enclosure 15 and opposite openings of the ceramic side wall members 22 are closed with lids 14 and 16. That is, the lid 14, square enclosure 15 and lid 16 constitute a box-shaped housing B. The cell assembly NC is mounted in the box-shaped housing B with the stacking direction extending horizonally.

A partition plate 17 connects a wall surface Sy formed by end surfaces of the cell holders 5, partition members 8 and collecting plate holders 12 at an upper side of the cell assembly NC to inner surfaces of the box-shaped housing B, i.e. an inner surface of the base 14, an inner surface of the square enclosure 15 and an inner surface of the base 16. In this way, the interior of the box-shaped housing B is divided into two compartments. The interior of the box-shaped housing B may be divided into two compartments by one partition plate 17 since one ceramic side wall member 22 of the cell assembly NC cantacts and rests on one side wall of the square enclosure 15.

One of the sides of the cell assembly NC where the intercellular passages "y" are open communicates with one of the compartments. The other side of the cell assembly NC communicates with the other compartment. Thus, one of the two compartments is used as a gas duct Y1 for supplying gas to the intercellular passages "y", and the other compartment as a gas duct Y2 for exhausting gas from the intercellular passages "y".

### [Sixth Embodiment]

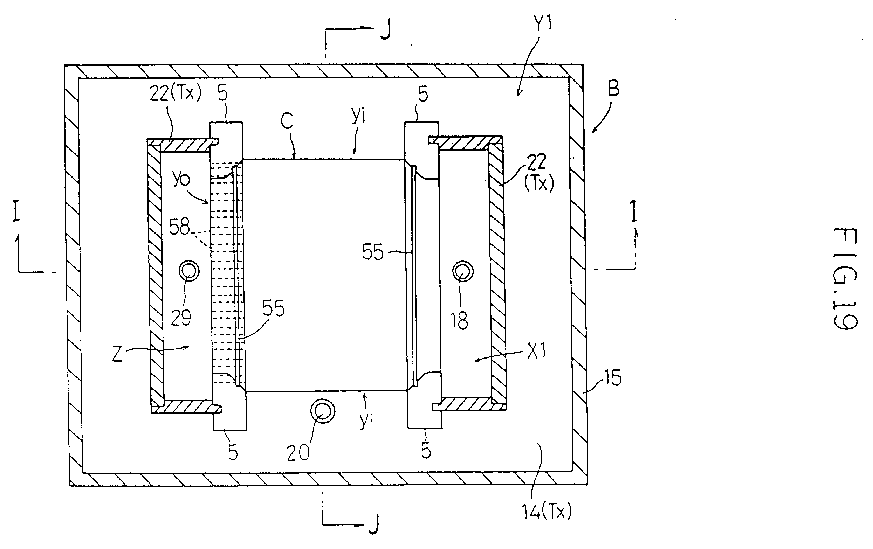

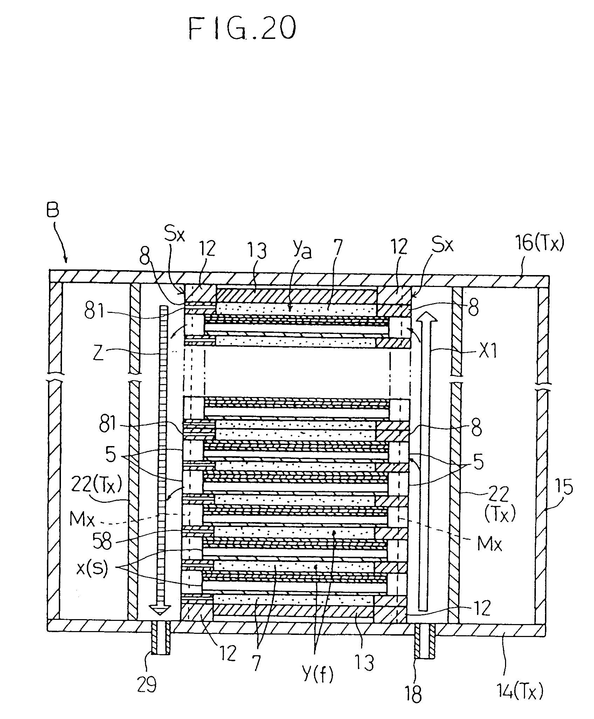

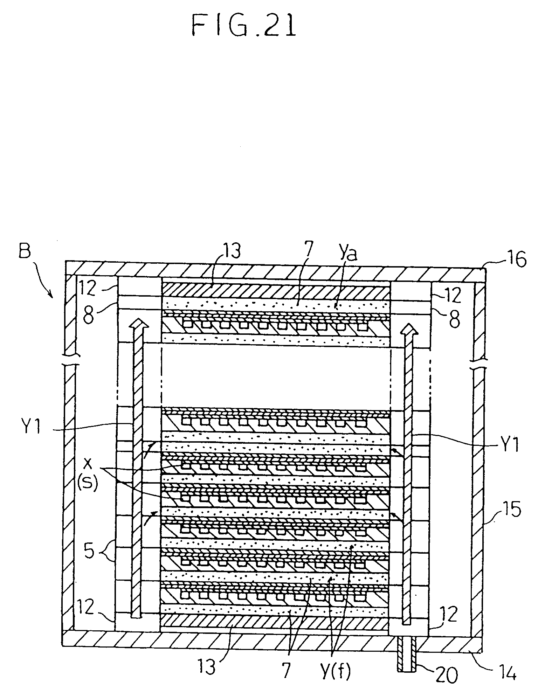

A sixth embodiment will be described with reference to Figs. 19 through 21.

The cells C have the same construction as in the first embodiment.

The cell assembly NC is the same as in the first embodiment excepting that each of the thin blades 5 of the cell holders 5 at one side includes a plurality of bores 58, and that each of the partition members 8 at the same side includes a plurality of bores 81.

As in the first embodiment, the cell assembly NC having the ceramic side wall members 22 is mounted in the box-shaped housing B.

The two sides of the cell assembly NC where the intercellular passages "y" are open are opposed to interior regions of the box-shaped housing B. In other words, the intercellular passages "y" are open to the interior regions of the box-shaped housing B.

The intercellular passages "y" communicate also with interiors of the ceramic side wall members 22 through the bores 58 and 81.

In the following description, openings of the intercellular passages "y" at the sides of the cell assembly NC are labeled with "yi", and openings through the bores 58 and 81 are labeled with "yo".

The interior of one of the ceramic side wall members 22 (connected to the cell holders 5 not having the bores 58) is used as gas duct X1 for supplying gas to the intracellular passages "x". The interior of the box-shaped housing B is used as gas duct Y1 for supplying gas to the intercellular passages "y". The interior of the other ceramic side wall member 22 (connected to the cell holders 5 having the bores 58) is used as common gas duct Z, i.e. combining gas duct X2 for exhausting gas from the intracellular passages "x" and gas duct Y2 for exhausting gas from the intercellular passages "y".

Thus, a fuel gas is supplied through the gas duct Y1 and the openings yi at the opposite sides of the cell assembly NC into the intercellular passages "y". After flowing through the intercellular passages "y", the fuel gas is exhausted through the bores 58 and 81 and the openings yo to the common gas duct Z. An oxygen-containing gas is supplied through the gas duct X1 into the intracellular passages "x", and exhausted therefrom to the common gas duct Z.

The oxygen-containing gas and fuel gas exhausted to the common gas duct Z is burned therein to heat the cell assembly NC.

Thus, the bore 58 act as a connecting passage.

A gas supply pipe 18 is connected to the gas duct X1 for supplying gas to the intracellular passages "x". A gas supply pipe 20 is connected to the gas duct Y1 for supplying gas to the intercellular passages "y". A gas exhaust pipe 29 is connected to the common gas duct Z for exhausting combustion gas.

### [Other Embodiments]

Other embodiments will be described hereinafter.
(1) In the foregoing embodiments, the contact surfaces 53 forming a pair are both inclined. Instead, only one of the pair may be inclined. In this case, the incline Cs need not be formed on the closed end surface C2 of cell C opposed to the contact surface 53 not inclined. The contact surfaces 53 may be formed to be parallel to each other. In this case, the incline Cs need not be formed on the closed end surface C2 of cell C.
(2) The number Of cells C forming cell unit U is not limited to five, but is variable as appropriate.
(3) In the first embodiment, the cell unit U is formed by stacking five cells C vertically. Instead, five cells C may be stacked horizontally to form a cell unit U.
   In the first embodiment, the cell assembly NC is formed by stacking a plurality of cell units U vertically. Instead, the cell units U may be stacked horizontally to form a cell assembly NC.
(4) Instead of forming cell units U, a required number of cells C may simply be stacked to form a cell assembly NC.
(5) In each of the foregoing embodiments, each cell C has the conductive separator 4 attached to the oxygen electrode 2 of the three-layer structure. Alternatively, the conductive separator 4 may be attached to the fuel electrode 3 of the three-layer structure. In this case, the intracellular passages "x" are opposed to the fuel electrodes 3 to act as fuel gas passages "f", and the intercellular passages "y" are opposed to the oxygen electrodes 2 to act as oxygen-containing gas passages "s".

## Claims

1. A fuel cell system comprising:
cells (C) in form of rectangular plates each including an electrolyte layer (1) having an oxygen electrode (2) applied to one surface thereof and a fuel electrode (3) applied to the other surface, and a passage-defining member (4) for defining intracellular passages (x) opposed to one of said oxygen electrode (2) and said fuel electrode (3), each of said cells (C), with said passage-defining member (4), having one of opposed pairs of end surfaces acting as open end surfaces (C1) where said intracellular passages (x) are open, and the other opposed pair of end surfaces acting as closed end surfaces (C2) where said intracellular passages (x) are closed;
said cells (C) being stacked in a spaced relationship to form a cell assembly (NC), with intercellular passages (y) formed between said cells;
characterized in that
cell holders (5) acting as pairs are arranged at open sides (C3) of said cells (C) where said intracellular passages (x) are open;
notches (51) are formed in said cell holders (5), each having substantially the same depth as a thickness of one of said cells, and extending from one end to the opposite end of one of said cells, for receiving one of said open sides (C3), each of said notches including contact surfaces (53) for tight contact with said closed end surfaces (C2) adjacent opposite ends of each of said open sides (C3),
said cell assembly (NC) is formed by said cells (C) stacked as held by said cell holders (5) with said open sides (C3) fitted into said notches (51), and in a spaced relationship to form said intercellular passages (y) in between; and
said intercellular passages (y) are closed at said open end surfaces by said pairs of said cell holders (5), and open at said closed end surfaces.

2. A fuel cell system as defined in claim 1, further comprising:
communicating openings (57) defined by said notches (51) at end surfaces of said cell holders (5) stacked, and communicating with said intracellular passages (x);
wall surfaces (Sx) forming pairs extending in a stacking direction at opposite sides of said communicating openings (57); and
a gas duct forming structure (Tx) for forming gas ducts (X1, X2) communicating with said intracellular passages (x), said gas duct forming structure being connected to said wall surfaces (Sx) to cover the sides of said cell assembly (NC) where said communicating openings (57) are open.

3. A fuel cell system as defined in claim 2, characterized in that said gas duct forming structure (Tx) is formed of ceramic as are said cell holders (5), and connected to said wall surfaces (Sx) with opposite edges thereof fitted in grooves (Mx) formed in said wall surfaces (Sx) and extending over an entire length thereof in said stacking direction.

4. A fuel cell system as defined in claim 2, characterized in that:
said gas duct forming structure (Tx) includes:
an opposed pair of ceramic side wall members (23) and an opposed pair of ceramic lids (14, 16) surrounding the sides of said cell assembly (NC) where said communicating openings (57) are open, and formed of ceramic as are said cell holders (5); and
metallic side wall members (24) arranged to close openings of said opposed pair of ceramic side wall members (23) and said opposed pair of ceramic lids (14, 16); and
said ceramic side wall members (23) being connected to said wall surfaces (Sx) with opposite edges thereof fitted in grooves (Mx) formed in said wall surfaces (Sx) and extending over an entire length thereof in said stacking direction;
grooves (23m) are formed in inner surfaces of said ceramic side wall members (23) to extend over the entire length thereof in said stacking direction;
grooves (14mx) are formed in an inner surface of one of said ceramic lids (14, 16) to be continuous with said grooves (23m) of said ceramic side wall members (23), respectively;
slits (16sx) are formed in an inner surface of the other of said ceramic lids (14, 16) to be continuous with said grooves (23m) of said ceramic side wall members (23), respectively;
said metallic side wall members (24) having edges thereof fitted in said grooves (23m, 14mx) and said slits (16sx); and
seals (26) are filled into said grooves (23m, 14mx) and said slits (16sx).

5. A fuel cell system as defined in claim 2, characterized in that:
said gas duct forming structure (Tx) includes:
an opposed pair of side wall members (23) formed of ceramic as are said cell holders (5) and connected to said wall surfaces (Sx) with opposite edges thereof fitted in grooves (Mx) formed in said wall surfaces (Sx) and extending over an entire length thereof in said stacking direction;
a lid (14) formed of ceramic as are said cell holders (5) for closing said gas ducts (X1, X2) at one end in said stacking direction; and
metallic partition members (27) having side walls (27a) connected to said side wall members (23), and lids (27b) for closing said gas ducts (X1, X2) at the other end in said stacking direction;
grooves (23m) are formed in inner surfaces of said side wall members (23) to extend over the entire length thereof in said stacking direction;
grooves (14mx) are formed in an inner surface said lid (14) to be continuous with said grooves (23m) of said side wall members (23), respectively;
said wall members (27) having edges of said side walls (27a) thereof fitted in said grooves (23m) and said grooves (14mx) of said lid (14); and
seals (26) are filled into said grooves (23m, 14mx).

6. A fuel cell system as defined in claim 2, characterized in that:
said gas duct forming structure (Tx) includes:
a lid (14) formed of ceramic as are said cell holders (5) for closing said gas ducts (X1, X2) at one end in said stacking direction; and
metallic partition members (28) having side walls (28a), and lids (28b) for closing said gas ducts (X1, X2) at the other end in said stacking direction;
grooves (Mx) are formed in said wall surfaces (Sx) to extend over the entire length thereof in said stacking direction;
grooves (14mx) are formed in an inner surface said lid (14) to be continuous with said grooves (Mx) of said side wall surfaces (Sx), respectively;
said partition members (28) having edges thereof fitted in said grooves (Mx) of said side surfaces (Sx) and said grooves (14mx) of said lid (14); and
seals (26) are filled into said grooves (Mx, 14mx).

7. A fuel cell system as defined in claim 2, further comprising connecting passages (58) formed in said cell holders (5) arranged at one side of said cell assembly (NC) for interconnecting said intercellular passages (y) and said gas duct (X2) communicating with said intracellular passages (x), wherein said cell assembly (NC) is mounted in a box-shaped housing (B), and said gas duct (X2) communicating with said intracellular passages (x) and connected to said connecting passages (58) is used also as a gas duct (Y2) communicating with said intercellular passages (y).

8. A fuel cell system as defined in claim 2, characterized in that said gas duct forming structure (Ty) defines gas ducts (Y1, Y2) communicating with said intercellular passages (y), said gas duct forming structure (Ty) being connected to one pair of wall surfaces (Sy) formed by said cell holders (5) stacked, to the other pair of wall surfaces (Sy) formed by said cell holders (5), to cover the sides of said cell assembly (NC) where said intercellular passages (y) are open.

9. A fuel cell system as defined in claim 2, characterized in that said cell assembly (NC) is mounted in a box-shaped housing (B), said box-shaped housing (B) including a partition (17) for connecting an inner surface of said box-shaped housing (B) to one of said wall surfaces (Sy) formed by the end surfaces of said cell holders (5) stacked, a partition (17) for connecting an inner surface of said box-shaped housing (B) to another of said wall surfaces (Sy) formed by the end surfaces of said cell holders (5), to divide said box-shaped housing (B) into two compartments for use as gas ducts (Y1, Y2) communicating with said intercellular passages (y).

10. A fuel cell system as defined in claim 1, characterized in that said contact surfaces (53) at least at one side are inclined to approach to the contact surface (53) at the other side, away from said open sides (C3) as seen in said stacking direction, said closed end surfaces (C2) defining inclines (Cs) for tight contact with said inclined contact surfaces (53).
